## Europäisches Patentamt
## European Patent Office
## Office européen des brevets

(19)

(11) Numéro de publication : **0 215 138 B1**

(12) **FASCICULE DE BREVET EUROPEEN**

(45) Date de publication du fascicule du brevet :
16.01.91 Bulletin 91/03

(51) Int. Cl.⁵ : **A01N 1/02, A61K 31/19, A61K 31/22**

(21) Numéro de dépôt : **85111290.4**

(22) Date de dépôt : **06.09.85**

(54) **Préservation des tissus vivants.**

Le dossier contient des informations techniques présentées postérieurement au dépôt de la demande et ne figurant pas dans le présent fascicule.

(43) Date de publication de la demande :
**25.03.87 Bulletin 87/13**

(45) Mention de la délivrance du brevet :
**16.01.91 Bulletin 91/03**

(84) Etats contractants désignés :
**CH DE FR GB LI SE**

(56) Documents cités :
**FR-A- 2 317 943
CHEMICAL ABSTRACTS, vol. 67, no. 1, 3 juillet 1967, page 128, no. 1418n, Columbus, Ohio, US; J.M. NISHIITSUTSUJI-UWO et al.: "Metabolic activities of the isolated perfused rat kidney", & BIOCHEM. J. 1967, 103(3), 852-62
CHEMICAL ABSTRACTS, vol. 75, no. 15, 11 octobre 1971, page 135, no. 96310y, Columbus, Ohio, US; O. WIELAND et al.: "Interconversion of pyruvate dehydrogenase in rat heart muscle upon perfusion with fatty acids or ketone bodies", & FEBS (FED. EUR. BIOCHEM. SOC.) LETT. 1971, 15(4), 295-8
Idem
CHEMICAL ABSTRACTS, vol. 80, no. 9, 4 mars 1974, page 191, no. 45884j, Columbus, Ohio, US; C. DOBRESCU et al.: "Relation between glucose, fatty acid, and ketone body metabolism in isolated perfused frog heart", & REV. ROUM. BIOL., SER. ZOOL. 1973, 18(4), 281-8
Idem
CHEMICAL ABSTRACTS, vol. 95, no. 17, 26 octobre 1981, page 436, no. 148030s, Columbus, Ohio, US; L. MENAHAN et al.: "Regulation of acetoacetyl-CoA in isolated perfused rat hearts", & EUR. J. BIOCHEM. 1981, 119(2), 295-9
Idem**

(56) Documents cités :
**CHEMICAL ABSTRACTS, vol. 85, no. 19, 8 novembre 1976, page 303, no. 140327s, Columbus, Ohio, US; P.A. MAYES et al.:: "Effect of hematocrit value and pO2 on the redox state and metabolism of the perfused liver", & BIOCHEM. J. 1976, 156(3), 685-9**

(73) Titulaire : **SOCIETE DES PRODUITS NESTLE S.A.**
**Case postale 353
CH-1800 Vevey (CH)**

(72) Inventeur : **Gomez, Olga
Petite Ruelle
CH-1822 Chernex (CH)**
Inventeur : **Guidoux, René
Route du Pavement 30
CH-1018 Lausanne (CH)**

## Description

La présente invention a trait à la préservation des tissus vivants en l'absence ou en l'insuffisance d'oxygénation par le sang.

Dans des conditions normales d'oxygénation, la réduction de l'oxygène par la chaîne respiratoire mitochondriale fournit la majeure partie de l'énergie provenant du catabolisme des acides gras et des glucides, sous forme d'adénosine-triphosphate (ATP).

L'appauvrissement du contenu tissulaire en ATP et en créatine-phosphate se produisant en périodes d'absence de l'oxygénation (anoxie) ou d'insuffisance de l'oxygénation (ischémie) par le sang favorise le développement d'altérations cellulaires irréversibles durant ces périodes et lors de la réoxygénation des tissus.

Lorsque le tissu n'est pas irrigué et privé d'oxygène, la fermentation de glucose en lactate fournit quelque énergie, mais s'accompagne d'une acidification du cytoplasme de la cellule, en raison de l'accumulation de lactate. Cette acidification intra-cellulaire entrave le métabolisme et compromet la reprise de fonction du tissu lorsque l'irrigation et l'oxygénation reprennent.

On a proposé l'hypothèse que chez certains animaux, en situation d'anaérobie la métabolisation de l'aspartate et du glutamate en succinate était liée à la phosphorylation non oxydative d'adénosine-diphosphate (ADP) s'effectuant à l'intérieur des mitochondries (Hochachka, P., Owen T.G., Amer. Zool. 13 : 543-555, 1973).

D'autre part, on a décrit l'effet de l'infusion intraveineuse de monoacétoacétate de glycérol comme source non protéique d'énergie chez les rats brûlés, et on a montré que ce composé pouvait remplacer le glucose comme source énergétique lors de la nutrition parentérale (Maiz.A., Moldawer, L.L., Bistrian, B.R., Biochem. J., 1985, 226/1, 43-50).

Enfin, l'article de J.M. Nishiitsutji - Uwo et coll. dans Biochem. J. 103,852-862,1967 décrit le métabolisme oxydatif de l'acétoacétate dans le cycle de Krebs au niveau des mitochondries conduisant au dioxyde de carbone dans la plupart des tissus autres qu'hépatiques. Cette production d'énergie est aérobie.

Nous avons constaté que l'adjonction d'acétoacétate à une solution de perfusion du coeur, dans des conditions d'anoxie, exerçait une protection contre les altérations fonctionnelles résultant de l'anoxie. L'effet protecteur résultait vraisemblablement d'une production anaérobique d'énergie liée à la phosphorylation non oxydative d'ADP s'effectuant à l'intérieur des mitochondries, où la réduction d'acétoacétate en β-hydroxybutyrate était couplée à l'oxydation d'autres substrats intra-cellulaires en succinate. Un tel effet peut également avoir un rôle bénéfique pour la préservation d'autres tissus que le coeur, par exemple le rein, le foie ou l'oeil lors d'anoxie et d'ischémie.

L'invention concerne donc l'utilisation de l'acide acétoacétique ou de l'un de ses sels ou esters physiologiquement acceptables pour l'obtention d'une composition pharmaceutique destinée à la préservation des tissus vivants en l'absence ou en l'insuffisance d'oxygénation par le sang.

Par sels ou esters physiologiquement acceptables on entend les sels ou esters qu'on trouve habituellement dans les solutions de perfusion ou cardioplégiques. On utilisera de préférence les sel de sodium, en quantité efficace pour l'effet de protection recherché.

La composition pharmaceutique contiendra également avantageusement l'acide pyruvique ou un de ses sels ou esters physiologiquement acceptables, de préférence le pyruvate de sodium. Elle peut également ment contenir un agent énergétique, par exemple le glucose.

De préférence, la composition pharmaceutique se présentera sous forme d'une solution aqueuse physiologique stérile isotonique ou légèrement hypertonique, par exemple une solution de perfusion ou cardioplégique couramment utilisée lors des opérations ou transplantations d'organes.

Elle sera utilisée de préférence dans les situations où les organes sont exposés à des périodes prolongées d'anoxie ou d'ischémie, par exemple lors d'infarctus ou de transplantation cardiaque. Bien que l'effet de protection ait été démontré dans le cas du coeur, à titre d'illustration il n'y a aucune raison de penser qu'il ne se manifesterait pas lors d'opérations ou de transplantations d'autres organes, par exemple de l'oeil, du foie ou du rein.

L'invention concerne également une méthode de traitement d'organes en vue de leur préservation en dehors des organismes vivants, caractérisée par le fait que l'on perfuse sous insuffisance d'oxygénation lesdits organes avec une composition pharmaceutique telle que décrite précédemment.

L'exemple ci-après illustre l'invention. Il est précédé d'une description de la méthode permettant les différentes mesures de la fonction cardiaque.

### Système de perfusion

Celui-ci sera mieux compris à l'aide des dessins annexés dans lesquels :

la Fig. 1 représente un diagramme schématique du système de perfusion et

la Fig. 2 représente un schéma particulier du système de perfusion employé uniquement pendant la période d'anaérobie.

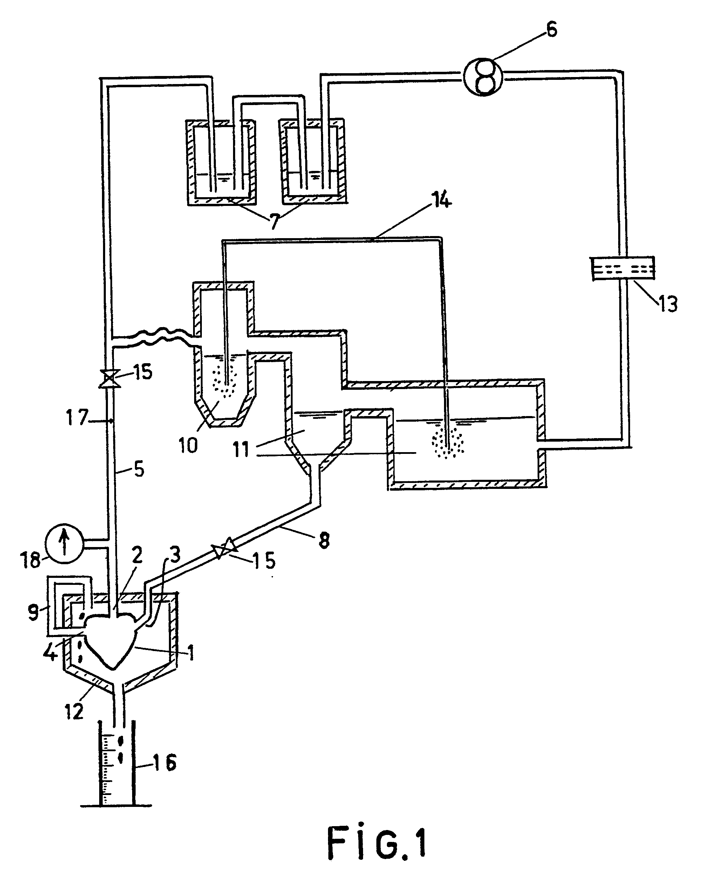

A la figure 1, le coeur 1 est canalisé par l'aorte 2, les veines pulmonaires 3 et l'artère pulmonaire 4. Il est relié au circuit de perfusion par l'intermédiaire d'une canule 5 dont une extrémité est introduite dans l'aorte 2. La canule 5 est elle-même reliée par son autre extrémité à une pompe péristaltique 6 (à débit pulsatoire) via des reservoirs 7 à double paroi thermostatisés. Des canules 8 et 9 relient respectivement les veines pulmonaires 3 à des réservoirs 10, 11 à double paroi thermostatisés et l'artère pulmonaire 4 à une chambre 12 à double paroi thermostatisée entourant le coeur. Un filtre 13 d'acétate de cellulose (diamètre des pores : 0,8 µm) placé entre les réservoirs 11 et la pompe 6 clarifie en permanence la solution de perfusion. Les réservoirs 10, 11 sont pourvus de deux circuits 14 d'alimentation par barbotage du liquide de perfusion, l'un avec un mélange gazeux oxygéné (95% :$O_2$-5% :$CO_2$), l'autre avec un mélange gazeux non oxygéné (95% :$N_2$-5% :$CO_2$). Des valves 15 permettent de passer instantanément de la technique de perfusion rétrograde dans laquelle le coeur 1 est perfusé par l'aorte 2 et ne chasse pas de liquide à la technique de perfusion antérograde dit "du coeur travaillant" dans laquelle le coeur est perfusé par les veines pulmonaires 3 et développe un débit aortique. Dans les deux techniques, on peut mesurer le débit coronarien du liquide qui s'écoule librement par l'artère pulmonaire 4 vers la chambre thermostatisée 12 et est recueilli depuis celle-ci dans un cylindre gradué 16. La pompe 6 permet de faire circuler le liquide de perfusion et de régler la pression aortique de base (post-charge). Le réglage de la pression de remplissage du ventricule gauche (pré-charge) se fait en déplaçant verticalement le réservoir 10. Le débit aortique est mesuré par un débitmètre electromagnétique 17 à l'aide d'une sonde intra-aortique, la pression étant calibrée à l'aide d'un manomètre à mercure 18.

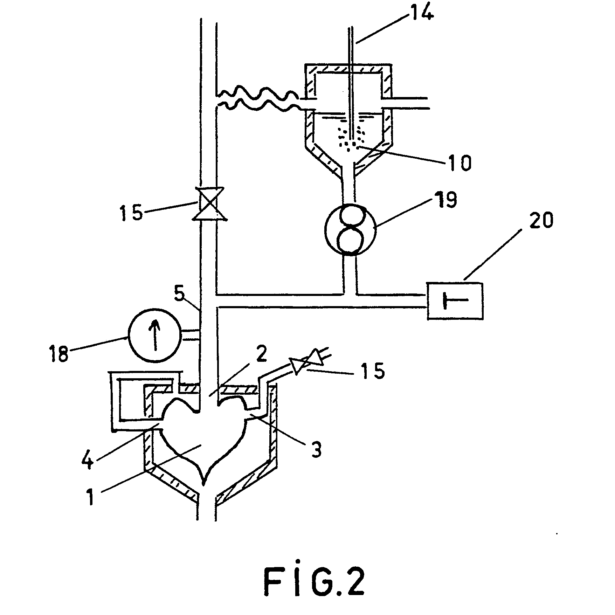

A la figure 2, un segment de circuit supplémentaire branché sur le circuit non oxygéné comprend une pompe 19 à débit constant et réglable permettant de faire circuler le liquide de perfusion par la voie aortique rétrograde. Les substances à tester sont introduites dans le liquide de perfusion au niveau de l'aorte par une micro-pompe doseuse 20 à débit constant et réglable.

### Méthode de perfusion et mesures

Le coeur est prélevé sur des rats mâles adultes de souche Sprague-Dawley, de poids corporel compris entre 250 et 320 g et nourris selon un régime standard. L'animal est légérement anesthésié à l'éther puis décapité. Dès l'excision, le coeur est rapidement plongé dans du liquide physiologique refroidi à 4°C, ce qui entraîne la cessation rapide de l'activité contractile. La période de perfusion est divisée en trois phases.

### Phase 1 : Période de stabilisation en aérobie

Le coeur est rapidement relié au système de perfusion par l'aorte et perfusé ensuite selon la technique rétrograde à une pression hydrostatique de 7,8 kPa (60 mm Hg), ce qui permet le rinçage du sang résiduel et la reprise du rythme spontané. On procède alors à la canulation des veines pulmonaires et de l'artère pulmonaire. La durée totale de ces deux opérations est 5 min. On passe ensuite à l'aide des valves 15 à la technique antérograde et la perfusion s'effectue avec un liquide gazé avec le mélange oxygéné par voie atriale gauche avec une pré-charge de 1,6 kPa (160 mm $H_2O$) et une post-charge de 7,8 kPa (60 mm Hg). Après une période de stabilisation de 15 min, on mesure le débit cardiaque (ml/min), qui est la somme des débits aortique et coronarien (liquide sortant de la chambre 12 provenant de l'artère pulmonaire et des pertes par la pointe du coeur).

### Phase 2 : Période d'anaérobie

Pendant cette période durant 30 ou 45 min, le coeur est perfusé par l'aorte à un débit constant de 15 ml/min avec un liquide de perfusion gazé avec le mélange non oxygéné. Les solutions de substances à tester sont injectées directement au niveau de l'aorte par la micro-pompe 20 à raison de 0,15 ml/min, la concentration molaire finale de ces substances étant 5 mM. Après quelques min d'anaérobie, il y a un arrêt total de la fonction contractile du coeur.

Phase 3 : Période de récupération en aérobie

Le coeur est perfusé de nouveau par voie atriale gauche (technique antérograde) avec un liquide de perfusion gazé avec le mélange oxygéné. Le débit cardiaque et la pression aortique sont mesurés 15 et 30 min après la réoxygénation du liquide de perfusion. Ils sont exprimés en pourcentage des valeurs obtenues avant la période d'anaérobie.

Liquides de perfusion

Le liquide de perfusion de base utilisé est une solution tampon bicarbonate de type Krebs-Henseleit amenée à la température de 37°C composée de :
120 mM NaCl, 5 mM KCl, 2,5 mM $CaCl_2$, 25 mM $NaHCO_3$, 1,2 mM $KH_2PO_4$, 1,2 mM $MgSO_4$ et 10 mM de pyruvate de sodium ou de lactate de sodium.
Les solutions de substances à tester ont été préparées le jour de l'expérience et leur pH ajusté à 7,4 à l'aide de NaOH. Elles n'ont été ajoutées au liquide de perfusion de base que durant la phase d'anaérobie.

Example

On a procédé à la perfusion de 45 coeurs avec un liquide de perfusion de base contenant du pyruvate de sodium et de 50 coeurs avec un liquide de perfusion de base contenant du lactate de sodium, puis on a mesuré les paramètres de la fonction cardiaque à la fin de la phase 1 (aérobie). Les résultats obtenus sont indiqués dans le tableau 1 ci-après :

### Tableau 1

| Liquide de perfusion continuelle de base avec | Pyruvate | Lactate |
|---|---|---|
| Poids des coeurs humides (g) | 1,46 ± 0,03 | 1,39 ± 0,03 |
| Débits (ml / min) | | |
| Aortique | 19,1 ± 1,14 | 22,9 ± 1,1 |
| Coronarien | 30,2 ± 1,3 | 27,3 ± 1,01 |
| Cardiaque | 49,3 ± 1,46 | 50,2 ± 1,36 |
| Pression aortique systolique (kPa) | 13,78 ± 0,25 | 14,25 ± 0,23 |

Après une période d'anaérobie de 30 ou 45 min (phase 2) au cours de laquelle une partie des coeurs étaient perfusés avec les solutions de substances indiquées dans le tableau 2 ci-après, la récupération fonctionnelle (phase 3) variait selon la nature des substances fournies aux coeurs durant la phase d'anaérobie comme indiqué dans le tableau 2 ci-après donnant la proportion de coeurs récupérant un débit cardiaque après l'anaérobie.

Tableau 2

| Substrats | | Proportion de coeurs recupérant un débit cardique après une anaérobie de | |
|---|---|---|---|
| Liquide de perfusion continuelle de base avec | Solutions de substances à tester perfusées pendant l'anaérobie | 30 minutes | 45 minutes |
| Lactate | Lactate (contrôle) | 1/3 | |
| | Aspartate | 4/4 | 0/10 |
| | Aspartate + glutamate + pyruvate * | 1/3 | |
| Pyruvate | Pyruvate (contrôle) | 5/5 | 1/5 |
| | Acétoacétate | 10/10 | 9/10 |
| | Acétoacétate + glutamate * | 4/4 | 0/4 |
| | β-Hydroxybutyrate | 2/3 | 0/3 |

Note : L'aspartate, le glutamate, le pyruvate et l'acétoacétate sont sous forme de sel de sodium.
* Lorsqu'il y a plusieurs substances perfusées (pendant la période d'anaérobie, celles-ci sont introduites successivement de manière que leur concentration individuelle finale soit 5 mM.

Remarques :

La plupart des coeurs du groupe contrôle recevant le lactate (liquide de perfusion de base) n'ont pas récupéré de fonctions mesurables après réoxygénation. L'addition d'aspartate au liquide de perfusion de base a permis une récupération fonctionnelle de tous les coeurs examinés après 30 minutes d'anaérobie. L'addition supplémentaire de glutamate a semblé interférer avec l'action de l'aspartate. Dans aucun de ces groupes n'a été noté de récupération après 45 min d'anaérobie.

Après 45 min d'anaérobie en présence de pyruvate (liquide de perfusion de base), la proportion de coeurs récupérant un débit mesurable était significativement plus élevée dans le groupe recevant l'acétoacétate que dans le groupe contrôle.

Après 30 min d'anaérobie, 95% des coeurs examinés avaient récupéré une fonction mesurable. Toutefois, une meilleure récupération de la contractilité cardiaque était déjà décelable dans le groupe recevant l'acétoacétate. Ainsi, la pression aortique était 69±3% de sa valeur avant l'anaérobie et le débit cardiaque

5

34±7% de sa valeur avant l'anaérobie pour le groupe contrôle. Pour le groupe recevant l'acetoacétate la pression aortique était 76±3% de sa valeur avant l'anaérobie et le débit cardiaque 52±7% de sa valeur avant l'anaérobie.

L'amélioration de la tolérance du coeur à l'anaérobie produite par l'acétoacétate n'était pas renforcée, mais au contraire affaiblie par l'apport de glutamate. En outre la perfusion de ß-Hydroxybutyrate n'a pas exercé d'effet protecteur.

**Revendications**

1. Utilisation de l'acide acétoacétique ou de l'un de ses sels ou esters physiologiquement acceptables pour l'obtention d'une composition pharmaceutique destinée à la préservation des tissus vivants en l'absence ou en l'insuffisance d'oxygénation par le sang.

2. Utilisation selon la revendication 1 de l'acétoacetate de sodium.

3. Utilisation selon la revendication 1 ou 2 en présence d'acide pyruvique ou d'un sel ou d'un ester physiologiquement acceptable de celui-ci.

4. Utilisation selon la revendication 3 en présence de pyruvate de sodium.

5. Utilisation selon la revendication 1 ou 2 en présence de glucose.

6. Utilisation selon l'une des revendications 1 à 5 sous forme d'une solution aqueuse physiologique stérile isotonique ou légèrement hypertonique.

7. Utilisation selon la revendication 6 sous forme d'une solution de perfusion ou d'une solution cardioplégique pour la préservation du coeur lors d'opérations ou de transplantations cardiaques.

8. Méthode de traitement d'organes en vue de leur préservation en dehors des organismes vivants, caractérisée par le fait qu'on perfuse sous insuffisance d'oxigénation lesdits organes avec une composition pharmaceutique contenant l'acide acétoacétique ou un de ses sels ou esters physiologiquement acceptables.

9. Méthode selon la revendication 8, caractérisée par le fait que la composition pharmaceutique contient l'acide pyruvique ou un de ses sels ou esters physiologiquement acceptables.

10 Méthode selon la revendication 9, caractérisée par le fait que la composition pharmaceutique contient l'acétoacétate de sodium et le pyruvate de sodium.

**Ansprüche**

1. Verwendung von Acetessigsäure oder eines ihrer physiologisch akzeptablen Salze oder Ester zur Herstellung einer pharmazeutischen Zusammensetzung, die für die Erhaltung lebender Gewebe bei fehlender oder mangelhafter Sauerstoffversorgung durch das Blut bestimmt ist.

2. Verwendung nach Anspruch 1 von Natriumacetoacetat.

3. Verwendung nach Anspruch 1 oder 2 in Gegenwart von Brenztraubensäure oder eines ihrer physiologisch akzeptablen Salze oder Ester.

4. Verwendung nach Anspruch 3 von Natriumpyruvat.

5. Verwendung nach Anspruch 1 oder 2 in Gegenwart von Glukose.

6. Verwendung nach einem der Ansprüche 1 bis 5 in Form einer wäßrigen physiologischen sterilen isotonischen oder leicht hypertonischen Lösung.

7. Verwendung nach Anspruch 6 in Form einer Perfusionslösung oder Kardioplegielösung zur Erhaltung des Herzens während einer Herzoperation oder -transplantation.

8. Verfahren zur Behandlung von Organen zu ihrer Erhaltung außerhalb von lebenden Organismen, dadurch gekennzeichnet, daß man die besagten Organe bei unzureichender Sauerstoffversorgung mit einer pharmazeutischen Zusammensetzung perfundiert, die Acetessigsäure oder eines/einen ihrer physiologisch akzeptablen Salze oder Ester enthält.

9. Verfahren nach Anspruch 8, dadurch gekennzeichnet, daß die pharmazeutische Zusammensetzung Brenztraubensäure oder eines/einen ihrer physiologisch akzeptablen Salze oder Ester enthält.

10. Verfahren nach Anspruch 9, dadurch gekennzeichnet, daß die pharmazeutische Zusammensetzung Natriumacetoacetat und Natriumpyruvat enthält.

EP 0 215 138 B1

## Claims

1. The use of acetoacetic acid or one of its physiologically acceptable salts or esters for obtaining a pharmaceutical composition intended for the preservation of living tissue in the absence of oxygenation or in the event of insufficient oxygenation by the blood.

2. The use claimed in claim 1 of sodium acetoacetate.

3. The use claimed in claim 1 or 2 in the presence of pyruvic acid or a physiologically acceptable salt or ester thereof

4. The use claimed in claim 3 in the presence of sodium pyruvate.

5. The use claimed in claim 1 or 2 in the presence of glucose.

6. The use claimed in any of claims 1 to 5 in the form of an isotonic or slightly hypertonic, sterile physiological aqueous solution.

7. The use claimed in claim 6 in the form of a perfusion solution or a cardioplegic solution for preservation of the heart during cardiac operations or transplantations.

8. A method for treating organs to preserve them outside living organisms, characterized in that said organs are perfused under insufficiency of oxygenation with a pharmaceutical composition containing acetoacetic acid or a physiologically acceptable salt or ester thereof.

9. A method as claimed in claim 8, characterized in that the pharmaceutical composition contains pyruvic acid or a physiologically acceptable salt or ester thereof.

10. A method as claimed in claim 9, characterized in that the pharmaceutical composition contains sodium acetoacetate and sodium pyruvate.

7

# FIG.1

# FİG.2